# EUROPEAN PATENT SPECIFICATION

(11) **EP 2 818 330 B1**
(45) Date of publication and mention of the grant of the patent: **30.11.2016**
(21) Application number: 14002093.4
(22) Date of filing: 17.06.2014
(51) Int. Cl.: B41M 7/00, B41M 5/00, C09D 11/38, B41J 11/00

(54) **Image recording method and image recording apparatus**
Bildaufzeichnungsverfahren und -vorrichtung
Méthode et appareil pour l'enregistrement d'images

(30) Priority: 28.06.2013 JP 2013137045
(43) Date of publication of application: 31.12.2014
(73) Proprietor: Canon Kabushiki Kaisha, Ohta-ku Tokyo (JP)
(72) Inventor: Taya, Akihiro, Tokyo (JP); Terada, Masahiro, Tokyo (JP); Kawamura, Hidetaka, Tokyo (JP); Masada, Yohei, Tokyo (JP); Ootsuka, Masanobu, Tokyo (JP); Aotani, Takaharu, Tokyo (JP)
(74) Representative: WESER & Kollegen

(56) References cited:
- EP-A1- 1 837 381
- EP-A2- 2 042 335
- US-A1- 2011 069 109

## Description

### BACKGROUND OF THE INVENTION

### Field of the Invention

The present invention relates to an image recording method and an image recording apparatus.

### Description of the Related Art

In recent years, image recording apparatuses, such as an ink-jet recording apparatus, have needed to enable high-speed recording. In order to well fix images even in high-speed recording, improvements in both ink and a recording process have been typically studied. In particular, techniques in which a specific surfactant is used as a component of an ink and in which a recording medium is heated during and/or after recording have been studied (Japanese Patent Laid-Open Nos. 2012-246435, 2011-245670, and 2011-063001).

In a technique disclosed in Japanese Patent Laid-Open No. 2012-246435, a non-absorbent recording medium is heated, and then an ink containing a fluorosurfactant is applied thereto, thereby improving the quality of an image formed on the non-absorbent recording medium. In a technique disclosed in Japanese Patent Laid-Open No. 2011-245670, an ink containing a fluorosurfactant is applied to a non-absorbent recording medium, and the recording medium is heated in two stages, in other words, heated during and after the recording to enhance the fastness and quality of an image formed on the non-absorbent recording medium. In a technique disclosed in Japanese Patent Laid-Open No. 2011-063001, an ink containing a fluorosurfactant is applied to a print sheet that is a less absorbent recording medium, and the print sheet is heated after the recording to improve the quality of an image formed on the print sheet.

EP 1 837 381 A1 discloses an ink-jet recording ink set including at least one recording liquid that comprises a polymerizable compound and a colorant and an ink spread suppressing liquid that comprises a nonionic fluorinated surfactant and does not substantially contain a colorant. EP 2 042 335 A2 related to an inkjet recording method which includes a step of applying an undercoat liquid onto a recording medium, a step of carrying out image formation by discharging a colored liquid onto the undercoat liquid, and a step of curing the colored liquid.

### SUMMARY OF THE INVENTION

The present invention in its first aspect provides an image recording method as specified in claims 1 to 3. The present invention in its second aspect provides an image recording apparatus as specified in claims 4 to 6.

Some aspects of the present invention provide an image recording method and image recording apparatus which enable formation of an image having a high color developability and excellent image quality.

Further features of the present invention will become apparent from the following description of exemplary embodiments with reference to the attached drawings.

### BRIEF DESCRIPTION OF THE DRAWINGS

Fig. 1 schematically illustrates an example of an image recording apparatus used in an image recording method according to an embodiment of the present invention.
Fig. 2 illustrates an example of an absorption curve used for explaining the absorption rate constant Ka of a recording medium.

### DESCRIPTION OF THE EMBODIMENTS

The inventors have conducted studies and found that the image recording methods disclosed in Japanese Patent Laid-Open Nos. 2012-246435, 2011-245670, and 2011-063001 cannot satisfy both the sufficient color developability and image quality of an image in some cases depending on the type of recording medium. In particular, in the case where a print sheet that is a less absorbent recording medium is used as a recording medium, an image formed thereon has a streaky color unevenness and a blank area, while the image has a high color developability; hence, the image quality is unsatisfactory. In the case where a recording medium having no ink-receiving layer, namely so-called plain paper, is used, the color developability of an image formed thereon is insufficient, whereas the image does not have a streaky color unevenness and a blank area.

Thus, the present invention provides an image recording method and image recording apparatus which enable formation of an image having a high color developability and excellent image quality regardless of the type of recording medium.

The present invention will now be described in detail with reference to embodiments.

The inventors have studied the cause of the problem in which the typical techniques cannot satisfy both the sufficient color developability and image quality of an image depending on the type of recording medium. The inventors found that an image formed on a print sheet that is a less absorbent recording medium suffers from a streaky color unevenness and a blank area because ink drops landed on the recording medium have a problem in spreading thereon. The inventors also found that an image formed on plain paper does not have a good color developability because the ink permeates the recording medium.

The inventors have further carried out studies and found that use of a fluorosurfactant as a component of an ink enables improvement of the color developability and image quality of an image as compared with use of other surfactants. This is because fluorosurfactants tend to decrease the contact angle of an ink to a recording medium as compared with other surfactants. The smaller the contact angle of an ink to a recording medium is, the more the ink is likely to spread in a direction horizontal to the surface of the recording medium. Hence, a colorant easily remains in the vicinity of the surface of the recording medium, which enables improvement of color developability. The spread of an ink in a direction horizontal to the surface of a recording medium also reduces streaky color unevenness and a blank area, which leads to improvement of image quality. Accordingly, in order to form an image having a high color developability and excellent image quality, ink needs to easily spread in a direction horizontal to the surface of a recording medium.

As described above, however, the color developability and image quality of an image are unsatisfactory depending on the type of recording medium in some cases. In the case where plain paper is used as a recording medium, ink permeates the recording medium before the ink spreads in a direction horizontal to the surface of the recording medium, and thus a colorant does not sufficiently remain in the vicinity of the surface of the recording medium with the result that the color developability of the image is reduced. In the case where a print sheet is used as a recording medium and where the surface thereof has a high water repellency, ink droplets have a problem in spreading thereon in some cases even when a fluorosurfactant is used, which results in the occurrence of streaky color unevenness and a blank area.

Then, the inventors have studied various approaches to recording an image having a high color developability even on plain paper and to recording an image having a high image quality with reduced streaky color unevenness and blank area even on a print sheet and accomplished the present invention; in particular, an ink is prepared so as to contain a fluorosurfactant as well as a relatively large amount (30 mass% or more) of a water-soluble organic solvent, and an ink-applied recording medium is heated so that the surface temperature of the ink-applied recording medium is not less than 70°C. The advantageous effects of the present invention are provided as follows.

In order to form an image having a high color developability and excellent image quality regardless of the type of recording medium, ink needs to easily spread in a direction horizontal to the surface of the recording medium as described above. The inventors have found that not only the contact angle of an ink to a recording medium but also the viscosity of the ink has a large effect on the force of the ink for spreading in a direction horizontal to the surface of the recording medium. In other words, no matter how small the contact angle of an ink to a recording medium is, the large viscosity of the ink prevents the ink from sufficiently spreading in the horizontal direction. Then, the inventors have conducted studies also in terms of the viscosity of ink and found a technique of heating a recording medium to which ink has been applied. Heating an ink-applied recording medium enhances the thermal motion of the molecules in the ink, which leads to a decrease in the viscosity of the ink. In addition, since a speed at which a fluorosurfactant is oriented to the air-liquid interface of an ink droplet is increased, the force of the ink for spreading in the horizontal direction is further enhanced. In this case, if the heating rapidly promotes the evaporation of water contained in the ink, the concentration of the solid content in the ink increases with the result that the viscosity of the ink may increase; however, in the present invention, since the ink contains a large amount of a water-soluble organic solvent, an increase in the concentration of the solid content due to the evaporation of water is suppressed, which eliminates an increase in the viscosity of the ink. In the case where the water-soluble organic solvent content is larger than the water content and where a general surfactant containing both a hydrophilic group and a hydrophobic group is used, the water-soluble organic solvent exhibits affinity with the hydrophobic group with the result that the balance between the hydrophilic properties and hydrophobic properties collapses, which impairs the surfactant properties. The fluorine atoms (-F) contained in the fluorosurfactant are, however, hydrophobic as well as being lipophobic and therefore enable the balance between the hydrophilic properties and hydrophobic properties to be kept even in a condition in which the water-soluble organic solvent content is large, so that proper surfactant properties can be provided.

The inventors have further carried out studies and found that the effects in which the viscosity of ink is decreased and in which the force of ink for spreading in the horizontal direction is further enhanced are particularly significant when an ink-applied recording medium is heated so that the surface temperature of the ink-applied recording medium is not less than 70°C and when the water-soluble organic solvent content in the ink is not less than 30 mass%. Heating an ink-applied recording medium and controlling the water-soluble organic solvent content in the ink in this manner can give high color developability even in recording on plain paper and effectively reduce streaky color unevenness and a blank area even in recording on a print sheet.

The advantageous effects of the present invention can be provided by the combined influences of the individual elements as described above.

### Image Recording Method

The image recording method of the present invention includes a conveying process for conveying a recording medium, an ink-applying process for applying an ink to the recording medium, and a heating process for heating the ink-applied recording medium so that the surface temperature of the ink-applied recording medium is not less than 70°C.

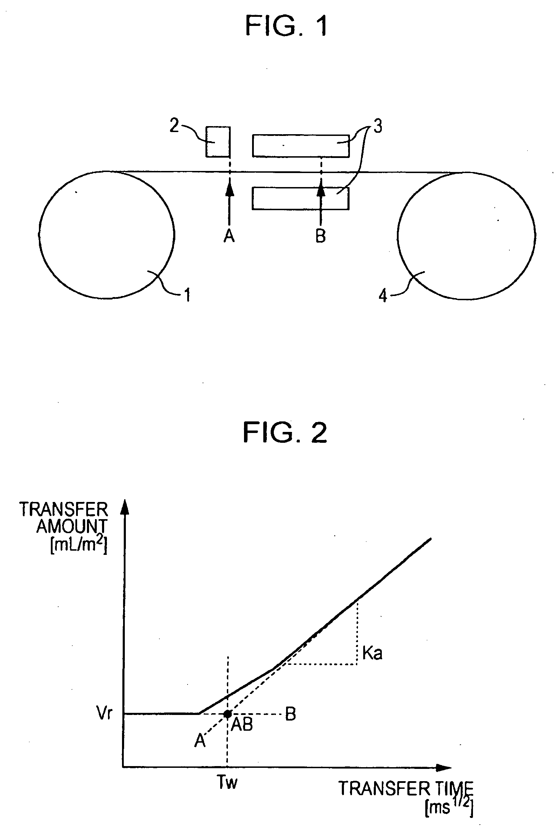

Fig. 1 schematically illustrates an example of an image recording apparatus used in the image recording method of the present invention. In the image recording apparatus illustrated in Fig. 1, recording is carried out on a recording medium which has been wound into a roll, and the recording medium subjected to the recording is wound into a roll again. The recording apparatus includes a recording medium-feeding means 1 which is a unit for holding and feeding the recording medium wound into a roll, an ink-applying means 2 which is a unit for applying an ink to the recording medium, a heater 3 which is a unit for heating the recording medium, and a recording medium retriever 4 which is a unit for winding the recording medium on which an image has been recorded. The recording medium is conveyed along a recording medium-conveying path, which is indicated by a solid line in Fig. 1, by a conveying means including, for example, a pair of rollers and a belt and subjected to a recording process at each unit. After the recording medium is wound into a roll by the recording medium retriever 4, the recording medium may be, for instance, cut in a predetermined size or bound in another apparatus.

In the conveying process for conveying a recording medium in the present invention, the recording medium is preferably conveyed at a rate of not less than 5/6 m·s⁻¹ (50 m/min), and more preferably not less than 5/3 m·s⁻¹ (100 m/min).

In the present invention, the recording medium can be under tension. In other words, the image recording apparatus can include a tension-applying unit which allows the recording medium to be under tension. In particular, a tension-applying portion which serves to apply tension to the recording medium and a tension-controlling portion which serves to control the tension of the recording medium can be disposed at part of a conveying mechanism between the recording medium-feeding means 1 and the recording medium retriever 4 in Fig. 1. In the case where the recording medium is under tension, the swelling of the fibers of the recording medium due to water contained in ink can be suppressed. The swelling of the fibers of the recording medium makes gaps between the fibers larger with the result that a speed at which the ink penetrates is increased; however, an increase in the speed at which the ink penetrates causes the ink to be more likely to deeply penetrate in the direction vertical to the surface of the recording medium, which results in impairing the color developability of an image in some cases. Since applying tension to the recording medium reduces the swelling of the fibers of the recording medium due to water content in ink as described above, a reduction in the color developability of an image due to an increase in the speed at which the ink penetrates can be suppressed.

The tension to be applied to the recording medium can be not less than 20 N/m. In particular, in the ink-applying process, ink can be applied to the recording medium to which a tension of not less than 20 N/m has been applied. At a tension of not less than 20 N/m, the swelling of the fibers of the recording medium due to water contained in ink can be further efficiently suppressed. Moreover, the tension to be applied to the recording medium is preferably not less than 30 N/m, and more preferably in the range of 40 N/m to 100 N/m.

The ink-applying process and the heating process will now be described.

### (1) Ink-Applying Process

In the present invention, ink is applied to the recording medium in the ink-applying process. A method for applying ink to the recording medium can be an ink-jet method. Hence, the image recording method of the present invention can be an ink-jet recording method. The ink-jet method may be a thermal ink-jet method in which thermal energy is applied to ink to eject the ink from the ejection port of a recording head or may be a piezoelectric ink-jet method in which a piezoelectric device is used to eject ink from the ejection port of a recording head.

The recording head may be a serial type in which recording is carried out through scanning by the recording head in a direction intersecting with a direction in which the recording medium is conveyed or may be a full-line type in which multiple nozzles are arrayed so as to cover the maximum width of a recording medium that is to be used. In order to record an image at a higher speed, the recording head can be an ink-jet recording head of a full-line type. In the ink-jet recording head of a full-line type, the nozzles can be arrayed in lines vertical to the direction in which a recording medium is conveyed. In addition, multiple ink-jet recording heads of a full-line type can be provided for respective inks having different colors and disposed in a direction parallel to the conveying direction.

### (2) Heating Process

In the present invention, heating is carried out in the heating process so that the surface temperature of the ink-applied recording medium is not less than 70°C. The term "surface temperature of the ink-applied recording medium" is herein defined as follows: assuming that the moment at which the ink is applied to the recording medium is zero second, temperature of the surface of the recording medium is measured at a position to which the recording medium has been transferred for 0.5 seconds, and the obtained temperature is the surface temperature of the ink-applied recording medium. In particular, assuming that a rate at which the recording medium is conveyed is V(m/min), the temperature of the surface of the ink-applied part X of the recording medium is measured when the ink-applied part X which travels from an ink-applied position (position A in Fig. 1) in parallel with the direction in which the recording medium is conveyed has reached a position distant from the position A by "V x 0.5/60(m)" (position B in Fig. 1). In Examples of the present invention, the temperature of the surface of a recording medium is measured with a non-contact infrared thermometer Digital Infrared Temperature Sensor FT-H20 (manufactured by Keyence Corporation) at a point which is distant from the surface of the recording medium by 10 cm in a substantially vertical direction.

In the present invention, the surface temperature of the ink-applied recording medium can be not less than 80°C. In order to prevent thermal deformation of the recording medium, the surface temperature can be not more than 140°C. The recording medium can be heated with, for example, a heater which applies heat from the top side (side to which an ink is applied) and/or back side of the recording medium.

In the heating process in the present invention, the heating may be started before the application of ink and continued after the application of the ink provided that the surface temperature of the recording medium is not less than 70°C at least after the application of the ink. In the present invention, the heating is preferably not carried out before ink is applied to a recording medium; alternatively, even when the heating is carried out before the application of ink, the surface temperature of the recording medium is preferably less than 70°C, more preferably 60°C or less, and especially preferably 40°C or less.

In the heating process, the recording medium may be heated under application of pressure with, for instance, a pressure roller. Application of pressure enables an image to be further fixed. In the case where pressure is applied, the pressure need not be applied all through the heating process; the pressure may be applied in the part of the heating process. Moreover, pressure may be applied in multiple stages. Furthermore, a pressure-applying process may be carried out after the heating process. Ink

The ink used in the present invention contains a surfactant represented by Formula (1), a water-soluble organic solvent, and water. In addition, the ink may contain a colorant or another component. Components which can be contained in the ink used in the present invention will now be described.

### Surfactant

The ink used in the present invention contains the surfactant represented by Formula (1):

R¹(CR²R³)ₙCH₂CH₂(OCH₂CH₂)ₘOH... (1)

(in Formula (1), R¹ is a fluorine atom or a hydrogen atom, R² and R³ are each independently a fluorine atom or a hydrogen atom, at least one of R² and R³ is a fluorine atom, n is from 1 to 30, and m is from 1 to 60).
Examples of the surfactant represented by Formula (1) include FS-3100 (manufactured by DuPont) and MEGAFACE F-444 (manufactured by DIC Corporation; MEGAFACE is a registered trademark of DIC Corporation).

In the case where the hydrophile-lipophile balance (HLB) of the surfactant represented by Formula (1) is determined by the Griffin's method, the HLB is preferably in the range of 4 to 15, and more preferably 6 to 10.

The amount of the surfactant represented by Formula (1) can be in the range of 0.1 mass% to 5.0 mass% relative to the total mass of the ink.

The ink used in the present invention can further contain a nonionic surfactant which is different from the surfactant represented by Formula (1). In this case, the amount of the surfactant represented by Formula (1) relative to the total mass of the ink can be from 0.1 to 2.0 times the amount of the nonionic surfactant relative thereto on a mass basis. The nonionic surfactant that can be used in combination with the surfactant represented by Formula (1) can be acetylenic glycol or a nonionic surfactant in which ethylene oxide has been added to acetylenic glycol.

### Colorant

The ink used in the present invention can further contain a colorant. Examples of the colorant include pigments and dyes, and any known colorant can be employed. In the present invention, pigments are more likely to remain in the vicinity of the surface of the recording medium than dyes and thus can be used in view of the color developability of an image. The colorant content is preferably in the range of 0.1 mass% to 15.0 mass%, and more preferably 1.0 mass% to 10.0 mass% relative to the total mass of the ink.

In the case where a pigment is used as the colorant in the present invention, the pigment may be, on the basis of a method for dispersing a pigment, a resin dispersion type in which resin is used as a dispersant (e.g., a resin-dispersed pigment in which a resin dispersant is used, a microcapsule pigment in which the surfaces of the pigment particles are coated with resin, or a resin-bonded pigment in which organic groups containing a resin are chemically bonded to the surfaces of the pigment particles) or a self-dispersion type in which hydrophilic groups are introduced to the surfaces of pigment particles (e.g., a self-dispersion pigment). Pigments employing different dispersion methods can be used in combination. In particular, carbon black and an organic pigment can be used as the pigment. A single pigment can be used alone, or two or more pigments can be used in combination. In the case where the pigment to be used is a resin-dispersed type, resin is used as a dispersant. The resin used as a dispersant can have both a hydrophilic moiety and a hydrophobic moiety. Specific examples of such a resin include resins produced through copolymerization of carboxy group-containing monomers, such as acrylic acid and methacrylic acid, and aromatic group-containing monomers, such as styrene, and urethane resins produced through polymerization of anionic group-containing diols such as dimethylolpropionic acid. The acid value of the resin used as the dispersant can be in the range of 50 mgKOH/g to 300 mgKOH/g. The weight average molecular weight (Mw) of the resin used as the dispersant, which is obtained by gel permeation chromatography (GPC) in terms of polystyrene, can be in the range of 1,000 to 15,000. The resin dispersant content in the ink is preferably in the range of 0.1 mass% to 10.0 mass%, and more preferably 0.2 mass% to 4.0 mass% relative to the total mass of the ink. The resin dispersant content can be 0.1 to 1.0 times the pigment content on a mass basis.

In the case where a dye is used as the colorant in the present invention, a dye which is water-soluble owing to the presence of an anionic group such as a sulfonate group or a carboxy group can be employed; specific examples thereof include acid dyes, direct dyes, and reactive dyes which are all listed in Colour Index International. Dyes not listed in Colour Index International can be suitably used provided that the dyes each have at least an anionic group such as a sulfonate group or a carboxy group.

### Aqueous Medium

The ink used in the present invention may contain water and a water-soluble organic solvent. The water can be deionized water (ion exchanged water). The water-soluble organic solvent to be used can be any known solvent generally used. Examples thereof include alcohols, glycols, alkylene glycols, polyethylene glycols, nitrogen-containing compounds, and sulfur-containing compounds. At least one of these water-soluble organic solvents can be appropriately used. In particular, glycerin and diethylene glycol can be employed.

In the present invention, the water-soluble organic solvent content in the ink is preferably not less than 30 mass%, and more preferably not less than 40 mass% relative to the total mass of the ink; the water-soluble organic solvent content is preferably not more than 90 mass%.

The water content in the ink can be in the range of 10 mass% to 60 mass% relative to the total mass of the ink.

### Other Components

In addition to the above-mentioned components, the ink used in the present invention may optionally contain water-soluble organic compounds which are in the form of a solid at normal temperature, such as polyhydric alcohols (e.g., trimethylolpropane and trimethylolethane), urea, and urea derivatives (e.g., ethylene urea). Furthermore, the ink used in the present invention may optionally contain a variety of additives such as surfactants different from the above-mentioned surfactants, pH adjusters, corrosion inhibitors, preservatives, antifungal agents, antioxidants, reduction inhibitors, evaporation accelerators, and chelating agents.

### Recording Medium

The recording medium employed in the present invention can be any known recording medium generally used. Examples of such a recording medium include permeable recording media such as plain paper and glossy paper; less permeable recording media such as print sheets; and non-permeable recording media such as glass, plastic materials, and films. In particular, a recording medium of which the absorption rate constant Ka for water is not more than 0.3 mL/m²·ms^{1/2} can be used.

In the present invention, in order to obtain the absorption rate constant Ka of the recording medium, the Bristow's method described in Paper and Pulp Test Method No.51, "Explanation of Test Method of Liquid Absorptivity of Paper and Paperboard". JAPAN TAPPI JOURNAL is employed. The Bristow's method has been explained in a lot of commercially available books, and detailed explanation thereof is herein omitted. The Bristow method is defined using the wetting time Tw, the absorption rate constant Ka (mL/m²·ms^{1/2}), and the roughness index Vr (mL/m²). Fig. 2 illustrates an example of an absorption curve. The absorption curve illustrated in Fig. 2 is based on a permeation model in which a liquid brought into contact with a recording medium starts to permeates the recording medium after a lapse of wet time Tw. The inclination of the line after a lapse of the wetting time Tw is the absorption rate constant Ka, and this absorption rate constant Ka corresponds to a speed at which the liquid permeates the recording medium. The wetting time Tw is determined as follows: as illustrated in Fig. 2, an approximation straight line A is defined by a least squares method to calculate the absorption rate constant Ka, a line B of V (amount of transferred liquid) = Vr (roughness index) is defined, the intersection AB of the lines A and B is determined, and the wetting time Tw is defined as time taken to reach the intersection AB. In the present invention, water at 25°C is used as the liquid which permeates the recording medium. In other words, the Ka is herein an absorption rate constant for water at 25°C.

The recording medium used in the ink-jet recording method of the present invention may be preliminarily cut in a predetermined size or may be in the form of a roll and cut in a predetermined size after images are formed. A recording medium wound into a roll can be more suitably used because tension is easily applied thereto.

### EXAMPLES

The present invention will now be described further in detail with reference to Examples and Comparative Examples. The present invention is not limited thereto without departing from the spirit of the present invention. In Examples, the term "part" is on a mass basis unless otherwise specified.

### Preparation of Ink

### Preparation of Pigment Dispersion Liquid

A 500-mL recovery flask having a mechanical stirrer was put into a chamber of an ultrasonic generator, and 5.0 g of a vinyl resin having an acid value of 170 mgKOH/g and 120 mL of tetrahydrofuran were put thereinto and then stirred under application of ultrasonic. Into another container, 5 g of a cyan pigment (C.I. Pigment Blue 15:3) was put, 120 mL of tetrahydrofuran was added thereto, and the content was mixed with a planetary stirrer (manufactured by KURABO INDUSTRIES LTD.) to such an extent that the surface of the pigment was thoroughly wetted with the solvent. The resulting mixture was put into the above-mentioned 500-mL recovery flask and then well mixed with the vinyl resin.

Then, an aqueous potassium hydroxide solution was dropped into the product for phase inversion so that the neutralization index of the vinyl resin was 100%, premixing was carried out for 60 minutes, and then dispersion was carried out for 2 hours with Nanomizer NM2-L200AR (manufactured by YOSHIDA KIKAI CO., LTD.). Tetrahydrofuran was distilled off from this dispersion liquid with a rotary evaporator, and ion exchanged water was added thereto to adjust the concentration, thereby producing a pigment dispersion liquid having a pigment content of 6 mass%. Preparation of Ink

Materials shown in Table 1 were mixed and thoroughly stirred for dispersion, the mixtures were filtered through a glass filter AP20 (manufactured by Millipore Corporation), and an aqueous potassium hydroxide solution was appropriately added to the resulting mixtures to prepare inks having a pH adjusted to be 9.5. In Table 1, the F-444 was a fluorosurfactant manufactured by DIC Corporation and corresponded to the surfactant represented by Formula (1). The HLB of the F-444 was determined by the Griffin's method and was in the range of 8.2 to 9.1. The Acetylenol E100 was an acetylenol surfactant manufactured by Kawaken Fine Chemicals Co., Ltd.

**Table 1**

| Preparation of Ink | | | | (unit: part) | |
|---|---|---|---|---|---|
| Ink No. | Ink A | Ink B | Ink C | Ink D | Ink E |
| Pigment Dispersion Liquid | 50 | 50 | 50 | 50 | 50 |
| Glycerin | 10 | 15 | 20 | 15 | 15 |
| Diethylene Glycol | 10 | 15 | 20 | 15 | 15 |
| Fluorosurfactant F-444 | 1 | 1 | 1 | 1 | 0 |
| Acetylenol E100 | 0 | 0 | 0 | 1 | 1 |
| Water | 29 | 19 | 9 | 18 | 19 |

### Evaluation

### Formation of Image

A solid image (recording duty: 100%) was recorded on a recording medium with an ink-jet recording apparatus including a piezoelectric ink-jet head KJ4 (manufactured by KYOCERA Corporation, nozzle density: 600 dpi) under the conditions shown in Table 2 (type of ink used, type of recording medium, surface temperature of the ink-applied recording medium, and tension of the recording medium). The recording was carried out also under the following conditions: temperature of 23°C, relative humidity of 55%, ink ejection frequency of 39 kHz, recording medium-conveying rate of 5/3 m·s⁻¹ (100 m/min), and ink ejection volume of approximately 13 µl per dot during the recording. In the above-mentioned ink jet recording apparatus, when 13 ng of ink droplets for one dot were applied to a unit region of a 2.54/600 cm² (1/600-inches square) at a resolution of 600 dpi x 600 dpi, the recording duty was defined as 100%. The temperature of the surface of a recording medium was measured with a non-contact infrared thermometer Digital Infrared Temperature Sensor FT-H20 (manufactured by Keyence Corporation) at a point which was distant from the surface of the recording medium by 10 cm in a substantially vertical direction. The above-mentioned ink-jet recording apparatus included a tension-applying unit for applying tension to a recording medium. In Table 2, "plain paper" and "print sheet" in "Type of Recording Medium" were as follows:
plain paper: OK PRINCE JOSHITSU (basis weight: 64 g/m²,
manufactured by Oji Paper Co., Ltd.)
print sheet: OK TOP Coat+ (basis weight: 105 g/m²,
manufactured by Oji Paper Co., Ltd.).

### Evaluation of Color Developability of Image

The a* and b* of each of the formed images were measured with a spectrophotometer CM-2022 (manufactured by KONICA MINOLTA, INC.) to calculate chroma C*. Meanwhile, C^{*2}, a^{*2}, and b^{*2} satisfy the relationship C^{*2} = a^{*2} + b^{*2}. A chroma C* of not less than 55 was defined as a level in which the color developability of an image was desirable (evaluative result A), and a chroma C* of less than 55 was defined as a level in which the color developability of an image was unacceptable (evaluative result B). Table 2 shows results of the evaluation.

### Evaluation of Image Quality

Each of the formed images was visually observed to confirm whether streaky color unevenness and a blank area were generated in the image or not. In the case where no streaky color unevenness and blank area were observed in an image, the image quality thereof was evaluated as being desirable (evaluative result A); and in the case where streaky color unevenness and a blank area were observed in an image, the image quality thereof was evaluated as being unacceptable (evaluative result B). Table 2 shows results of the evaluation.

**Table 2**

| Conditions of Image Formation and Results of Evaluation | | | | | | | |
|---|---|---|---|---|---|---|---|
| Example No. | Ink | | Type of Recording Medium | Surface Temperature of Ink-Applied Recording Medium (°C) | Tension Applied to Recording Medium (N/m) | Evaluative Results | |
| | Ink No. | Amount of Water-Soluble Organic Solvent (mass%) | | | | Color Developability of Image | Image Quality |
| Example 1 | Ink B | 30 | Plain paper | 70 | 0 | A | A |
| Example 2 | Ink C | 40 | Plain paper | 70 | 0 | A | A |
| Example 3 | Ink B | 30 | Plain paper | 80 | 0 | A | A |
| Example 4 | Ink B | 30 | Plain paper | 70 | 20 | A | A |
| Example 5 | Ink D | 30 | Plain paper | 70 | 0 | A | A |
| Example 6 | Ink B | 30 | Print sheet | 70 | 0 | A | A |
| Example 7 | Ink C | 40 | Print sheet | 70 | 0 | A | A |
| Example 8 | Ink B | 30 | Print sheet | 80 | 0 | A | A |
| Example 9 | Ink B | 30 | Print sheet | 70 | 20 | A | A |
| Example 10 | Ink D | 30 | Print sheet | 70 | 0 | A | A |
| Comparative Example1 | Ink A | 20 | Plain paper | 70 | 0 | B | A |
| Comparative Example 2 | Ink B | 30 | Plain paper | 60 | 0 | B | A |
| Comparative Example 3 | Ink A | 20 | Plain paper | 80 | 0 | B | A |
| Comparative Example 4 | Ink E | 30 | Plain paper | 70 | 0 | B | A |
| Comparative Example 5 | Ink A | 20 | Print sheet | 70 | 0 | A | B |
| Comparative Example 6 | Ink B | 30 | Print sheet | 60 | 0 | A | B |
| Comparative Example 7 | Ink A | 20 | Print sheet | 80 | 0 | A | B |
| Comparative Example 8 | Ink E | 30 | Print sheet | 70 | 0 | A | B |

While the present invention has been described with reference to exemplary embodiments, it is to be understood that the scope of the invention is not limited to the disclosed exemplary embodiments but defined by the following claims.

## Claims

1. An image recording method comprising:
a conveying process for conveying a recording medium;
an ink-applying process for applying an ink to the recording medium; and
a heating process for heating the ink-applied recording medium after the ink-applying process so that the surface temperature of the ink-applied recording medium is not less than 70 °C and not more than 140 °C,
wherein the ink comprises an aqueous medium and a surfactant represented by Formula (1),
R¹(CR²R³)nCH2CH2(OCH2CH2)mOH (1)
where R¹ is a fluorine atom or a hydrogen atom, R² and R³ are each independently a fluorine atom or a hydrogen atom, at least one of R² and R³ is a fluorine atom, n is from 1 to 30, and m is from 1 to 60,
**characterized in that** the aqueous medium comprises a water-soluble organic solvent in addition to water and the water-soluble organic solvent content is not less than 30 mass% relative to the total mass of the ink.

2. The method according to Claim 1, wherein the ink-applying process involves applying the ink to the recording medium which is under a tension of not less than 20 N/m.

3. The method according to any one of Claims 1 and 2, wherein the recording medium is conveyed at a rate of not less than 5/6 m·s⁻¹ (50 m/min) in the conveying process.

4. An image recording apparatus comprising:
a conveying means (1) that serves to convey a recording medium;
an ink-applying means (2) that serves to apply an ink to the recording medium;
a heater (3) that enables the surface temperature of the ink-applied recording medium to be not less than 70°C and not more than 140 °C after the application of the ink; and
the ink, wherein the ink comprises an aqueous medium and a surfactant represented by Formula (1),
R¹(CR²R³)ₙCH₂CH₂(OCH₂CH₂)ₘOH (1)
where R¹ is a fluorine atom or a hydrogen atom, R² and R³ are each independently a fluorine atom or a hydrogen atom, at least one of R² and R³ is a fluorine atom, n is from 1 to 30, and m is from 1 to 60,
**characterized in that** the aqueous medium comprises a water-soluble organic solvent in addition to water and the water-soluble organic solvent content is not less than 30 mass% relative to the total mass of the ink.

5. The apparatus according to Claim 4, further comprising a tension-applying means that serves to apply a tension of not less than 20 N/m to the recording medium.

6. The apparatus according to any one of Claims 4 and 5, wherein the conveying means conveys the recording medium at a rate of not less than 5/6 m·s⁻¹ (50 m/min).

## Patentansprüche

1. Bildaufzeichnungsverfahren, umfassend:
einen Transportvorgang zum Transportieren eines Aufzeichnungsmediums;
einen Tintenauftragungsvorgang zum Auftragen einer Tinte auf das Aufzeichnungsmedium; und
einen Heizvorgang zum Erhitzen des Aufzeichnungsmediums mit darauf aufgetragener Tinte nach dem Tintenauftragungsvorgang, sodass die Oberfl5chentemperatur des Aufzeichnungsmediums mit darauf aufgetragener Tinte nicht weniger als 70 °C und nicht mehr als 140 °C betragt,
wobei die Tinte ein wassriges Medium und ein durch die Formel (1) dargestelltes oberfl5chenaktives Mittel umfasst,
R¹(CR₂R₃)ₙCH₂CH₂(OCH₂CH₂)ₘOH (1)
wobei R¹ ein Fluor- oder Wasserstoffatom ist, R² und R³ jeweils unabhangig voneinander ein Fluor- oder Wasserstoffatom sind, zumindest eines von R² und R³ ein Fluoratom ist, n von 1 bis 30 beträgt und m von 1 bis 60 beträgt,
**gekennzeichnet dadurch, dass** das wässrige Medium zusätzlich zu Wasser ein wasserlösliches organisches Lösungsmittel umfasst und der Gehalt des wasserlöslichen organischen Lösungsmittels nicht weniger als 30 Massen-% bezogen auf die Gesamtmasse der Tinte beträgt.

2. Verfahren nach Anspruch 1, wobei der Tintenauftragungsvorgang Auftragen der Tinte auf das Aufzeichnungsmedium, das unter einer Spannung von nicht weniger als 20 N/m steht, einschließt.

3. Verfahren nach einem der Ansprüche 1 und 2, wobei das Aufzeichnungsmedium beim Transportvorgang mit einer Rate von nicht weniger als 5/6 m·s⁻¹ (50 m/min) transportiert wird.

4. Bildaufzeichnungsvorrichtung, umfassend:
eine Transporteinrichtung (1), die zum Transport eines Aufzeichnungsmediums dient;
eine Tintenauftragungseinrichtung (2), die zum Auftragen einer Tinte auf das Aufzeichnungsmedium dient;
einen Heizer (3), der die Oberflachentemperatur des Aufzeichnungsmediums mit darauf aufgetragener Tinte nach dem Auftragen der Tinte von nicht weniger als 70 °C und nicht mehr als 140 °C ermöglicht; und
die Tinte, wobei die Tinte ein wässriges Medium und ein durch die Formel (1) dargestelltes oberflächenaktives Mittel umfasst,
R¹(CR²R³)ₙCH₂CH₂(OCH₂CH₂)mOH (1)
wobei R¹ ein Fluor- oder Wasserstoffatom ist, R² und R³ jeweils unabhangig voneinander ein Fluor- oder Wasserstoffatom sind, zumindest eines von R² und R³ ein Fluoratom ist, n von 1 bis 30 beträgt und m von 1 bis 60 beträgt,
**gekennzeichnet dadurch, dass** das wässrige Medium zusätzlich zu Wasser ein wasserlösliches organisches Lösungsmittel umfasst und der Gehalt des wasserlöslichen organischen Lösungsmittels nicht weniger als 30 Massen-% bezogen auf die Gesamtmasse der Tinte beträgt.

5. Vorrichtung nach Anspruch 4, weiterhin umfassend eine Spannungsanwendeeinrichtung, die zum Anwenden einer Spannung von nicht weniger als 20 N/m auf das Aufzeichnungsmedium dient.

6. Vorrichtung nach einem der Ansprüche 4 und 5, wobei die Transporteinrichtung das Aufzeichnungsmedium mit einer Rate von nicht weniger als 5/6 m·s⁻¹ (50 m/min) transportiert.

## Revendications

1. Procédé d'enregistrement d'image comprenant :
un processus de transport pour transporter un support d'enregistrement ;
un processus d'application d'encre pour appliquer une encre au support d'enregistrement ; et
un processus de chauffage pour chauffer le support d'enregistrement sur lequel de l'encre est appliquée après le processus d'application d'encre de façon que la température de surface du support d'enregistrement sur lequel de l'encre est appliquée ne soit pas inférieure à 70°C et ne soit pas supérieure à 140°C,
dans lequel l'encre comprend un milieu aqueux et un agent tensio-actif représenté par la formule (1),
R¹(CR²R³)ₙCH₂CH₂(OCH₂CH₂)ₘOH (1)
où R¹ est un atome de fluor ou un atome d'hydrogène, R² et R³ sont chacun indépendamment l'un de l'autre un atome de fluor ou un atome d'hydrogène, au moins l'un de R² et R³ est un atome de fluor, n varie de 1 à 30, et m varie de 1 à 60,
**caractérisé en ce que** le milieu aqueux comprend un solvant organique soluble dans l'eau ajouté à de l'eau et **en ce que** la teneur en solvant organique soluble dans l'eau n'est pas inférieure à 30% en masse par rapport à la masse totale de l'encre.

2. Procédé selon la revendication 1, dans lequel le processus d'application d'encre consiste à appliquer l'encre au support d'enregistrement qui est soumis à une tension non inférieure à 20 N/m.

3. Procédé selon l'une quelconque des revendications 1 et 2, dans lequel le support d'enregistrement est transporté à une vitesse non inférieure à 5/6 m·s⁻¹ (50 m/min) dans le processus de transport.

4. Appareil d'enregistrement d'image comprenant :
un moyen de transport (1) qui sert à transporter un support d'enregistrement ;
un moyen d'application d'encre (2) qui sert à appliquer une encre au support d'enregistrement ;
un élément chauffant (3) qui permet à la température de surface du support d'enregistrement sur lequel de l'encre est appliquée de ne pas être inférieure à 70°C et de ne pas être supérieure à 140°C après l'application de l'encre ; et
l'encre, dans lequel l'encre comprend un milieu aqueux et un agent tensio-actif représenté par la formule (1),
R¹(CR²R³)ₙCH₂CH₂(OCH₂CH₂)ₘOH (1)
où R¹ est un atome de fluor ou un atome d'hydrogène, R² et R³ sont chacun indépendamment l'un de l'autre un atome de fluor ou un atome d'hydrogène, au moins l'un de R² et R³ est un atome de fluor, n varie de 1 à 30, et m varie de 1 à 60,
**caractérisé en ce que** le milieu aqueux comprend un solvant organique soluble dans l'eau ajouté à de l'eau et **en ce que** la teneur en solvant organique soluble dans l'eau n'est pas inférieure à 30% en masse par rapport à la masse totale de l'encre.

5. Appareil selon la revendication 4, comprenant en outre un moyen d'application de tension qui sert à appliquer une tension non inférieure à 20 N/m au support d'enregistrement.

6. Appareil selon l'une quelconque des revendications 4 et 5, dans lequel le moyen de transport transporte le support d'enregistrement à une vitesse non inférieure à 5/6 m·s⁻¹ (50 m/min).
